# EUROPEAN PATENT SPECIFICATION

(11) **EP 2 783 836 B1**
(45) Date of publication and mention of the grant of the patent: **16.05.2018**
(21) Application number: 14160560.0
(22) Date of filing: 18.03.2014
(51) Int. Cl.: B29C 65/52, B29C 65/78, A41H 43/04, D06H 5/00, A41D 27/24

(54) **Cloth bonding apparatus**
Vorrichtung zum Verbinden von Stoff
Appareil de liaison de tissus

(30) Priority: 28.03.2013 JP 2013070190
(43) Date of publication of application: 01.10.2014
(73) Proprietor: Brother Kogyo Kabushiki Kaisha, Nagoya-shi, Aichi 467-8561 (JP)
(72) Inventor: Minagawa, Yuichiro, Nagoya-shi, Aichi 467-8562 (JP); Umeda, Kazutoshi, Nagoya-shi, Aichi 467-8562 (JP); Iwakoshi, Hiroyasu, Nagoya-shi, Aichi 467-8562 (JP); Nemoto, Yoshimitsu, Nagoya-shi, Aichi 467-8562 (JP)
(74) Representative: Prüfer & Partner mbB Patentanwälte · Rechtsanwälte

(56) References cited:
- EP-A1- 2 332 719
- US-A- 2 664 938
- US-A- 3 295 493

## Description

### BACKGROUND

The present invention relates to a cloth bonding apparatus that applies adhesive to a cloth and bonds the cloth to another cloth while feeding the cloths.

A cloth bonding apparatus may bond cloths using adhesive. The cloth bonding apparatus includes a feed mechanism and a nozzle. The feed mechanism may feed a cloth while pressing the cloth. The nozzle may apply the adhesive between a cloth and a cloth that face each other. The feed mechanism may feed the cloths while pressing the cloths, and the cloth may be bonded to the cloth. Thread is not used to bond cloths, and so unevenness on the clothes may not occur. The cloth bonding apparatus disclosed in Japanese Laid-Open Patent Publication No. 2010-275655 may dispose a nozzle between an upper cloth and a lower cloth. The nozzle may apply the adhesive to the lower cloth.

### SUMMARY

When a nozzle applies adhesive to a lower cloth, an upper cloth may be disposed on a top face of the nozzle. In this case, there are cases in which the upper cloth slips from the top face of the nozzle. As a result, the position of the upper cloth may be unstable and the upper cloth and the lower cloth may not be bonded at a desired position.

US 3,295,493 A discloses a cloth bonding apparatus according to the preamble of claim 1.

It is an object of the present invention to provide a cloth bonding apparatus that is capable of bonding an upper cloth and a lower cloth at a desired position, wherein the operator can easily place the upper cloth on a placement portion. This object is achieved by a cloth bonding apparatus having the features of claim 1. The invention is further developed as defined in the dependent claims.

A cloth bonding apparatus according to the present invention includes a base portion, a feed mechanism, a nozzle, a nozzle support mechanism, and a guide member. The feed mechanism is adapted to feed an upper cloth and a lower cloth in a feed direction while pressing the upper cloth and the lower cloth at a pressing position. The upper cloth and the lower cloth are disposed on the base portion and face each other. The nozzle is adapted to discharge adhesive, on an upstream side of the feed mechanism in the feed direction, between the upper cloth and the lower cloth that are disposed on the base portion. The nozzle extends in an extending direction intersecting the feed direction. The nozzle support mechanism is adapted to support one end of the nozzle in the extending direction. The guide member includes a placement portion. The placement portion is adapted such that the upper cloth is placed thereon and is separated from a top face of the base portion. The placement portion is disposed above the top face of the base portion and faces the nozzle on a side of the other end of the nozzle in the extending direction. The cloth bonding apparatus can inhibit the upper cloth from slipping and falling from the nozzle and thus inhibit a position of the upper cloth from becoming unstable. The cloth bonding apparatus can bond the upper cloth and the lower cloth at a desired position.

In the cloth bonding apparatus, the placement portion may have a plate shape. A height of a top face of the placement portion from the top face of the base portion may be not less than a height of a top face of the nozzle from the top face of the base portion. As the height of the top face of the placement portion from the top face of the base portion is not less than the height of the top face of the nozzle from the top face of the base portion, it is difficult for a portion of the upper cloth that is to be bonded to the lower cloth to slip and fall from the nozzle to the side of the placement portion. The cloth bonding apparatus can inhibit the upper cloth from slipping and falling from the top face of the nozzle and thus inhibit the position of the upper cloth from becoming unstable. As a result, the cloth bonding apparatus can inhibit displacement of a bonding position of the upper cloth and the lower cloth.

In the cloth bonding apparatus, an end of the placement portion on a downstream side in the feed direction may be on a side of the nozzle with respect to the pressing position. In this case, there is no interference between the placement portion of the cloth bonding apparatus and the feed mechanism. The feed mechanism can feed the upper cloth and the lower cloth in the feed direction with respect to the nozzle while pressing the upper cloth and the lower cloth.

In the cloth bonding apparatus, a length of the placement portion in the feed direction may be the same as a length of the nozzle in the feed direction. A position of the placement portion in the feed direction may be the same as a position of the nozzle in the feed direction. In this case, it is possible to make the placement portion of the cloth bonding apparatus smaller and it is also possible to inhibit the upper cloth from slipping and falling from the nozzle or from the placement portion.

In the cloth bonding apparatus, a lower end of the placement portion on the side of the nozzle is separated from the top face of the base portion. In this case, compared to a case in which the placement portion is not separated from the base portion, an operator can more easily dispose the lower cloth on the base portion.

In the cloth bonding apparatus, a distance by which the lower end of the placement portion on the side of the nozzle is separated from the top face of the base portion is less than the height of the top face of the nozzle from the top face of the base portion. In this case, even when the upper cloth slips and falls to the side of the nozzle, it is difficult for the upper cloth to enter below the lower side of the placement portion. Thus, the operator can easily place the upper cloth on the placement portion.

In the cloth bonding apparatus, a length of the placement portion in the extending direction may be not less than a length of the nozzle in the extending direction. The height of the top face of the placement portion from the top face of the base portion may be not less than 1 times and not more than 1.5 times the height of the top face of the nozzle from the top face of the base portion. In this case, compared to a case in which the length of the placement portion in the extending direction is less than the length of the nozzle in the extending direction, it is difficult for a portion of the upper cloth that is to be bonded to the lower cloth to slip and fall from the nozzle or from the placement portion. As the height of the top face of the placement portion from the top face of the base portion is not less than 1 times and not more than 1.5 times the height of the top face of the nozzle from the top face of the base portion, the height difference between the nozzle and the placement portion is small. Thus, it is difficult for the upper cloth to slip and fall from the nozzle or the placement portion. The cloth bonding apparatus can inhibit the upper cloth from slipping and falling from the nozzle and thus inhibit the position of the upper cloth from becoming unstable.

In the cloth bonding apparatus, the guide member may further include an adjustment portion that is adapted to adjust a distance between the other end of the nozzle in the extending direction and the placement portion. In a case where a nozzle having a different length in the extending direction is mounted on the cloth bonding apparatus, it is possible to adjust a distance between the nozzle and the placement portion in accordance with the length of the mounted nozzle in the extending direction. In a case where the nozzle having the different length in the extending direction is mounted on the cloth bonding apparatus, it is possible to support the upper cloth at a position that is above the base portion and that faces the nozzle on the side of the other end of the nozzle in the extending direction.

In the cloth bonding apparatus, the guide member may further include a lower cloth guide portion that is adapted to guide the lower cloth. The lower cloth guide portion may be disposed on an upstream side of the placement portion in the feed direction. The lower cloth guide portion may be adapted to guide the lower cloth in a state in which a part of the lower cloth guide portion is positioned facing a lower portion of the other end of the nozzle in the extending direction. The cloth bonding apparatus can maintain the position of the edge of the lower cloth onto which the adhesive is applied within a specific range. The cloth bonding apparatus can bond the upper cloth and the lower cloth at a desired position.

In the cloth bonding apparatus, the guide member may further include a shaft portion that is adapted to rotatably support the lower cloth guide portion. The lower cloth guide portion may be adapted to switch between a first posture and a second posture by rotating around the shaft portion. The first posture may be a posture in which the part of the lower cloth guide portion is positioned facing the lower portion of the other end of the nozzle in the extending direction. The second posture may be a posture in which the lower cloth guide portion is separated from the lower portion of the other end of the nozzle in the extending direction. In a case where the operator switches the position of the nozzle, for example, the operator can avoid interference between the nozzle and the lower cloth guide portion by switching the lower cloth guide portion to the second posture.

In the cloth bonding apparatus, the guide member may further include a guide position adjustment portion that is adapted to adjust a position of the lower cloth guide portion in the extending direction. The cloth bonding apparatus can adjust the position of the edge of the lower cloth onto which the adhesive is applied. The cloth bonding apparatus can bond the upper cloth and the lower cloth at a desired position.

### BRIEF DESCRIPTION OF THE DRAWINGS

Embodiments will be described below in detail with reference to the accompanying drawings in which:
FIG. 1 is an oblique view of a cloth bonding apparatus 1;
FIG. 2 is an oblique view of the vicinity of a nozzle 51;
FIG. 3 is a right side view of the surroundings of a lower feed portion 90;
FIG. 4 is an oblique view of a nozzle support mechanism 41;
FIG. 5 is a diagram showing a front view of screws 511 and 512 and a cross section of the nozzle 51 and a nozzle support portion 43 as seen from the direction of arrows on a line I-I that is shown in FIG. 4;
FIG. 6 is a front view of the nozzle support mechanism 41, a belt 20, the nozzle 51, and a guide member 70;
FIG. 7 is an oblique view of the nozzle support mechanism 41, the guide member 70, an upper cloth C2, and a lower cloth C1;
FIG. 8 is an oblique view of the vicinity of the nozzle 51 according to a second embodiment;
FIG. 9 is a front view of the nozzle support mechanism 41, the belt 20, the nozzle 51, and a guide member 170;
FIG. 10 is an oblique view of the vicinity of the nozzle 51 when a lower cloth guide mechanism 80 is in a first posture;
FIG. 11 is a front view of the vicinity of the lower cloth guide mechanism 80;
FIG. 12 is an oblique view of the vicinity of the nozzle 51 when the lower cloth guide mechanism 80 is in a second posture;
FIG. 13 is an oblique view of the vicinity of the nozzle 51 according to a third embodiment; and
FIG. 14 is a front view of the nozzle support mechanism 41, the belt 20, the nozzle 51, and a guide member 270.

### DETAILED DESCRIPTION OF EXEMPLARY EMBODIMENTS

A cloth bonding apparatus 1 according to a first embodiment of the present invention will be explained with reference to the drawings. In the following explanation, an up-down direction, a left-right direction and a front-rear direction indicated by arrows in the drawings are used. The cloth bonding apparatus 1 can bond an upper cloth and a lower cloth while feeding the cloths in a feed direction C. The feed direction C is a direction from the front of the cloth bonding apparatus 1 toward the rear of the cloth bonding apparatus 1. The front of the cloth bonding apparatus 1 is the upstream side of the feed direction C and the rear of the cloth bonding apparatus 1 is the downstream side of the feed direction C.

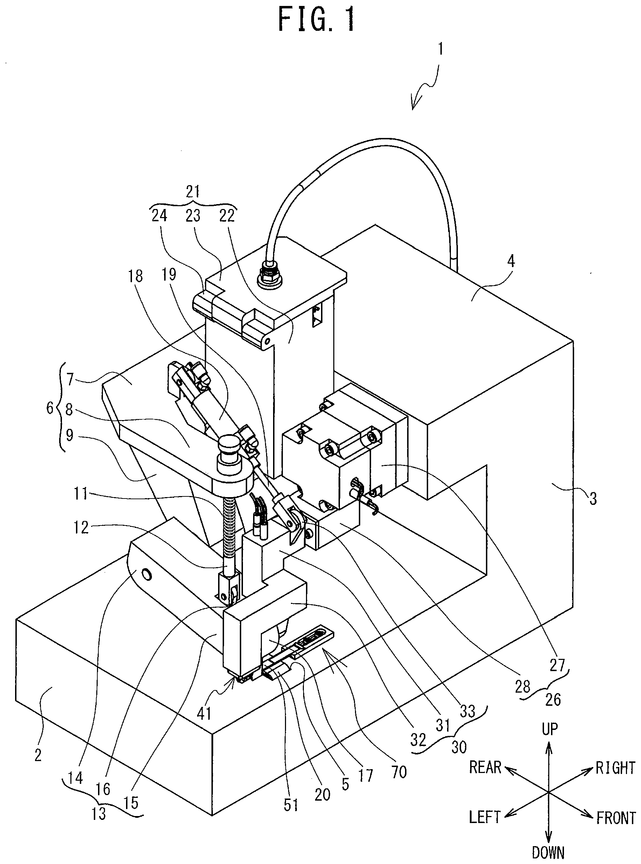

As shown in FIGS. 1 to 3, the cloth bonding apparatus 1 includes a base portion 2, a pillar 3 and an arm portion 4. The base portion 2 is a substantially cuboid shape. The base portion 2 is fixed to a table (not shown in the drawings). The pillar 3 extends upward from the right end of the base portion 2. The arm portion 4 is connected to the top end of the pillar 3 and protrudes toward the left from the left side face of the pillar 3.

A lower feed portion 90 is provided inside the base portion 2. The upper cloth and the lower cloth may be arranged on the base portion 2 and may face each other. The lower feed portion 90 is adapted to operate in cooperation with an upper feed roller 17 and to feed the upper cloth and the lower cloth in the feed direction C while pressing the upper cloth and the lower cloth. The base portion 2 is a base that supports the pillar 3. The pillar 3 supports the arm portion 4. The arm portion 4 includes a beam portion 6, a storage chamber 21, and a pump casing 26 in order from the rear left side. The arm portion 4 is internally provided with various motors etc. (not shown in the drawings).

The beam portion 6 includes a main body portion 7, a spring support portion 8, and a pillar portion 9. The main body portion 7 is substantially plate shaped and extends in the horizontal direction to the left from the rear portion on the left side of the arm portion 4. The spring support portion 8 is substantially plate shaped and extends in the horizontal direction to the front from the left end of the main body portion 7. The pillar portion 9 extends diagonally downward and to the front from the main body portion 7, at an angle of approximately 45 degrees with respect to the horizontal plane. The lower end of the pillar portion 9 is separated from the base portion 2. The main body portion 7 is provided with an air cylinder 18 at the right of the spring support portion 8. The air cylinder 18 is adapted to switch the position of a swinging portion 30. A hole (not shown in the drawings) is provided in the front end of the spring support portion 8 and the upper end of a shaft portion 12 is inserted into the hole. The spring support portion 8 supports the shaft portion 12 such that the shaft portion 12 can be moved in the up-down direction. The shaft portion 12 is inserted through a spring 11. A shaft (not shown in the drawings) is provided on the left side of the lower end of the pillar portion 9. The shaft extends in the left-right direction. The pillar portion 9 supports a rear end portion 14 of a roller holding portion 13 via the shaft. The roller holding portion 13 may swing a front end portion 15 in the up-down direction with the shaft as a center of rotation. The front end portion 15 of the roller holding portion 13 rotatably supports the upper feed roller 17. The upper feed roller 17 is a substantially cylindrical shape and is positioned in the vicinity of the rear of a nozzle 51. A shaft support portion 16 is provided at the front of the top face of the roller holding portion 13. The shaft support portion 16 supports the shaft portion 12. The spring 11 is interposed between the spring support portion 8 and the lower end of the shaft portion 12. The spring 11 urges the shaft portion 12 downward and thus urges the front end portion 15 of the roller holding portion 13 downward.

The storage chamber 21 is a substantially cuboid shape. The storage chamber 21 is provided on the left side of the arm portion 4 and on a front portion of the main body portion 7 of the beam portion 6, and extends in the up-down direction. The storage chamber 21 includes a storage chamber main body 22, a lid portion 23, and a lid shaft portion 24. The storage chamber main body 22 is a bottomed tubular shape of which an upper portion is open. The lid portion 23 may cover an opening at the upper portion of the storage chamber main body 22. The lid shaft portion 24 is provided on the left side of the upper portion of the storage chamber main body 22. The lid shaft portion 24 supports the lid portion 23 such that the lid portion 23 can be opened and closed. The storage chamber 21 may store adhesive (not shown in the drawings) in the storage chamber main body 22. The storage chamber 21 may supply the stored adhesive to the nozzle 51 as necessary. The pump casing 26 is fixed to the left side face of the arm portion 4 and the front of the storage chamber 21. The pump casing 26 is provided with a first pump casing 27 and a second pump casing 28. A gear pump (not shown in the drawings) is provided inside the first pump casing 27. The gear pump supplies an appropriate amount of adhesive to the nozzle 51 at a high level of accuracy. The second pump casing 28 extends downward from a lower left end face of the first pump casing 27. A shaft portion (not shown in the drawings) is provided on the left side of the second pump casing 28. The shaft portion is connected to the right side of an upper edge portion of the swinging portion 30 such that the swinging portion 30 can be swingably supported. The swinging portion 30 includes a first swinging portion 31, a second swinging portion 32, and a drive transmission portion 33. The first swinging portion 31 extends to the left from a left side face of the second pump casing 28 and extends while bending downward. The second swinging portion 32 is connected to the lower front face of the first swinging portion 31. The second swinging portion 32 extends to the left and extends while bending downward. The drive transmission portion 33 is provided on the upper end of the swinging portion 30. The drive transmission portion 33 supports the leading end portion of a movable portion 19 of the air cylinder 18. The movable portion 19 of the air cylinder 18 may move forward and backward and thus the swinging portion 30 may be swung in the front-rear direction around the shaft portion on the left side of the second pump casing 28. A nozzle support mechanism 41 is provided on the lower end face of the second swinging portion 32 such that the nozzle support mechanism 41 can be attached to and removed from the second swinging portion 32. The lower end of the nozzle support mechanism 41 is separated from the base portion 2. A flow path (not shown in the drawings) is provided inside the swinging portion 30. The flow path causes the adhesive (not shown in the drawings) supplied by the gear pump to flow from the pump casing 26 toward the nozzle support mechanism 41.

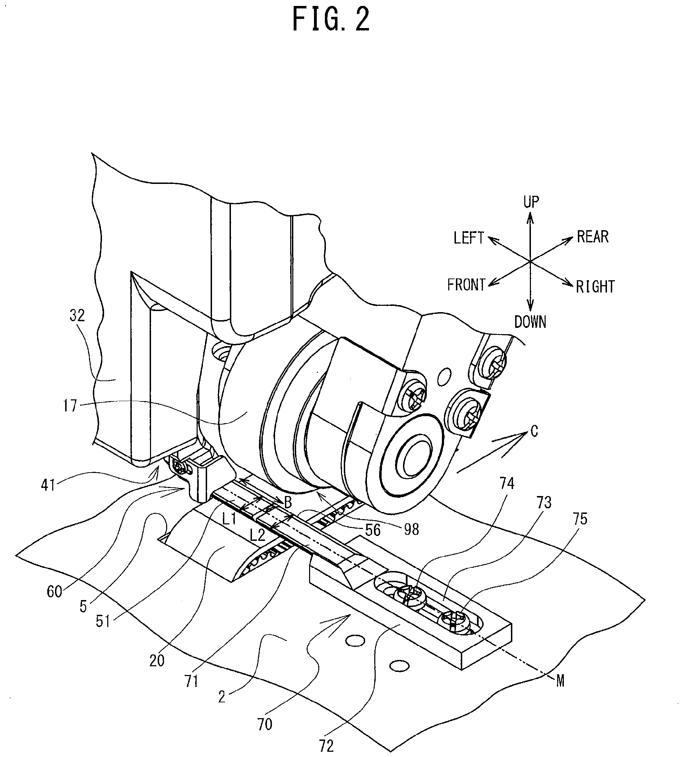

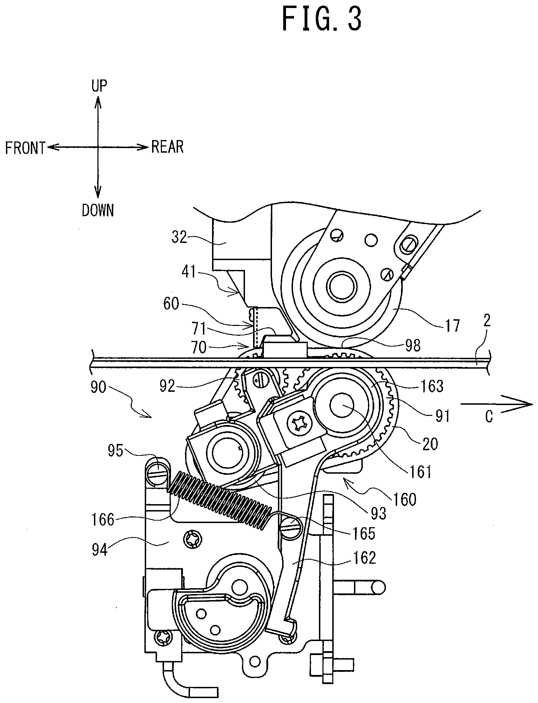

As shown in FIG. 3, the lower feed portion 90 includes a first pulley 91, a second pulley 92, a third pulley 93, a support arm 160, a belt 20, and a spring 166. The first pulley 91 is positioned underneath the upper feed roller 17 and underneath and diagonally to the rear of the nozzle 51. The second pulley 92 is positioned in front of the first pulley 91 and underneath and diagonally to the front of the nozzle 51. The third pulley 93 is positioned underneath and diagonally to the front of the second pulley 92. An upper portion of the support arm 160 rotatably supports the first pulley 91, the second pulley 92 and the third pulley 93. The belt 20 is provided around the first pulley 91, the second pulley 92, and the third pulley 93. The base portion 2 is provided with a hole 5 (refer to FIG. 1) in an area on the top face of the base portion 2 that is below the upper feed roller 17 and the nozzle 51. A part of the belt 20 protrudes slightly upward above the base portion 2 from the hole 5 (refer to FIG. 2). The first pulley 91 rotates in the clockwise direction in a right side view, in accordance with driving of a motor (not shown in the drawings). By the first pulley 91 rotating in the clockwise direction in the right side view, the belt 20 is rotated such that the part of the belt 20 that protrudes from the hole 5 is moved in a direction from the front toward the rear. In accordance with the rotation of the belt 20, the upper feed roller 17 is rotated in the counter-clockwise direction in a right side view. The upper feed roller 17 and the belt 20 may feed the upper cloth and the lower cloth in the feed direction C while pressing the upper cloth and the lower cloth at a pressing position 98. The support arm 160 includes a support portion 163 and an arm portion 162. The support portion 163 is provided on the upper side of the support arm 160. The support portion 163 rotatably supports a rotation shaft 161. The rotation shaft 161 is a rotation shaft of the first pulley 91. The arm portion 162 extends downward from the support portion 163. A spring attachment portion 165 is provided on a substantially central portion in the up-down direction of the arm portion 162. A frame 94 is provided inside the base portion 2 and is provided with a spring attachment portion 95. One end of the spring 166 is connected to the spring attachment portion 165 and the other end of the spring 166 is connected to the spring attachment portion 95. The spring 166 constantly urges the support arm 160 in the clockwise direction in a right side view around the rotation shaft 161. In other words, the spring 166 urges the belt 20 in the direction of the nozzle 51 (refer to FIG. 2).

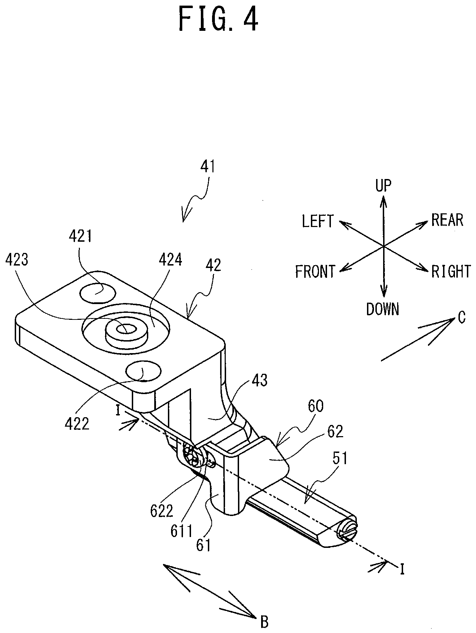

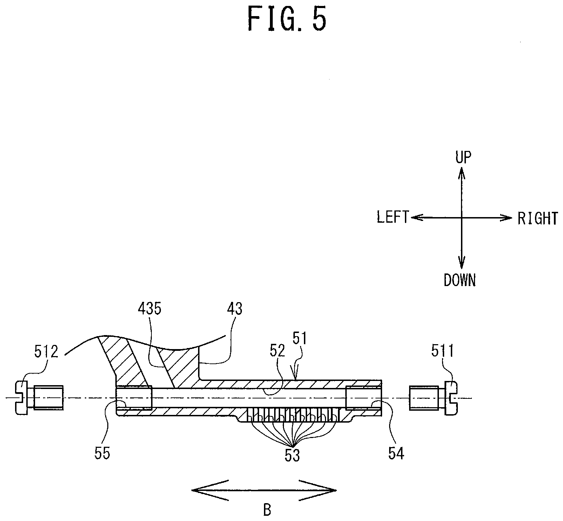

The nozzle support mechanism 41, the nozzle 51, and an upper cloth guide mechanism 60 will be explained with reference to FIGS. 2 and 4 to 7. The nozzle support mechanism 41 supports one end of the nozzle 51 in an extending direction B of the nozzle 51. The one end of the nozzle 51 in the extending direction B is the left end of the nozzle 51. As shown in FIG. 4, the nozzle support mechanism 41 includes a base body portion 42 and a nozzle support portion 43. The base body portion 42 is a plate shape that is substantially rectangular in a plan view. The base body portion 42 is provided with holes 421 and 422, a flow path outlet 423, and a groove portion 424. The holes 421 and 422 are provided in the vicinity of two opposing vertices of the base body portion 42 in a plan view. The holes 421 and 422 penetrate through the base body portion 42 in the up-down direction. The bottom face of the second swinging portion 32 (refer to FIG. 1) is provided with screw holes (not shown in the drawings). The screw holes of the second swinging portion 32 correspond to the holes 421 and 422. An operator may align positions of the holes 421 and 422 with positions of the screw holes of the second swinging portion 32, may insert screws (not shown in the drawings) through the holes 421 and 422, and may tighten the screws in the screw holes of the second swinging portion 32. The operator can thus fix the nozzle support mechanism 41 to the bottom face of the second swinging portion 32. The flow path outlet 423 is substantially circular in a plan view and opens at the center of the base body portion 42. A flow path 435 (refer to FIG. 5) is provided inside the nozzle support portion 43. The flow path outlet 423 is connected to one end of the flow path 435 (refer to FIG. 5). The adhesive (not shown in the drawings) may flow through the flow path inside the swinging portion 30 (refer to FIG. 1), may flow into the flow path outlet 423, and may flow to the flow path 435. The groove portion 424 surrounds the circumference of the flow path outlet 423. An O ring (not shown in the drawings) is fitted into the groove portion 424 and thus inhibits the adhesive from leaking out from a gap between the swinging portion 30 and the base body portion 42.

The nozzle support portion 43 is substantially cuboid. The nozzle support portion 43 extends diagonally downward and to the rear from the lower end of the base body portion 42. The lower right end of the nozzle support portion 43 supports the left end of the nozzle 51. One end of the flow path 435 (refer to FIG. 5) is connected to the flow path outlet 423 (refer to FIG. 4) of the base body portion 42. As shown in FIG. 5, the other end of the flow path 435 is connected to a flow path 52 inside the nozzle 51.

The nozzle 51 is rod-shaped and extends to the right in the horizontal direction from the right side face of the lower end of the nozzle support portion 43. The bottom face of the nozzle 51 is flat. The upper cloth and the lower cloth may be arranged on the base portion 2 and may face each other. The nozzle 51 may be positioned between the upper cloth and the lower cloth. The nozzle 51 extends in the extending direction B and may discharge the adhesive (not shown in the drawings) between the upper cloth and the lower cloth further to the upstream side, in the feed direction C, than the pressing position 98 (refer to FIG. 3). In the present embodiment, the extending direction B is orthogonal to the feed direction C. The bottom face of the nozzle 51 is separated from the top face of the base portion 2 (refer to FIG. 1). The top surface of the nozzle 51 is a horizontal surface.

As shown in FIG. 5, the flow path 52 is provided inside the nozzle 51. The adhesive (not shown in the drawings) may flow through the flow path 52. The flow path 52 extends in the extending direction B and passes through the nozzle 51. Both the left and right ends of the nozzle 51 have openings 54 and 55, respectively. The openings 54 and 55 are connected to the flow path 52. Screws 511 and 512 may be respectively tightened, from the outside, in the openings 54 and 55 of the nozzle 51 and may thus block the openings 54 and 55. The operator may remove the screws 511 and 512 from the openings 54 and 55 to open the flow path 52. Therefore, the operator may clean the flow path 52 and may remove the adhesive that is attached to the inner walls of the flow path 52.

The left upper end of the flow path 52 is connected to the flow path 435 of the nozzle support portion 43. The bottom face of the flow path 52 is provided with a plurality of discharge outlets 53. The plurality of discharge outlets 53 are aligned in a straight line in the extending direction B. Each of the plurality of discharge outlets 53 extends in the up-down direction. The lower end of each of the plurality of discharge outlets 53 penetrates through the bottom face of the nozzle 51. The adhesive (not shown in the drawings) may flow into the flow path outlet 423 of the base body portion 42 and may flow via the flow path 435 to the flow path 52. The nozzle 51 may discharge the adhesive that flows into the flow path 52, from the discharge outlets 53, and may apply the adhesive to the lower cloth.

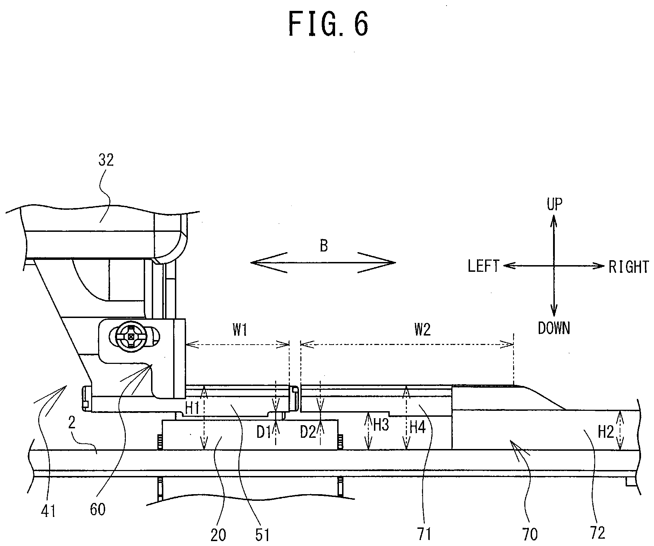

In order to change a length W1 (refer to FIG. 6) of the nozzle 51 in the extending direction B, it is possible to replace the nozzle 51 with a nozzle having different discharge outlets from the discharge outlets 53 shown in FIG. 5. In this case, the operator may remove the nozzle support mechanism 41 and the nozzle 51 from the bottom face of the second swinging portion 32, and may replace the nozzle 51 with another nozzle.

As shown in FIG. 4, the upper cloth guide mechanism 60 is fixed by a screw 622 to a substantially central portion, in the up-down direction, of the front face of the nozzle support portion 43. The upper cloth guide mechanism 60 is a plate that is substantially L-shaped in a plan view, and is positioned above the upper left side of the nozzle 51. The upper cloth guide mechanism 60 may guide the upper cloth that moves along the top face of the nozzle 51 to the downstream side in the feed direction C. The upper cloth guide mechanism 60 includes a fixing portion 61 and a guide portion 62. The fixing portion 61 extends in the left-right direction substantially in the center, in the up-down direction, of the front face of the nozzle support portion 43. The guide portion 62 extends to the rear from the right end of the fixing portion 61. The lower end of the guide portion 62 is in contact with the top face of the nozzle 51. The fixing portion 61 is provided with a long hole 611. The long hole 611 is long in the left-right direction and penetrates through the fixing portion 61. The short diameter of the long hole 611 is slightly larger than the diameter of the shaft portion of the screw 622 and is smaller than the diameter of the head portion of the screw 622. The front face of the nozzle support portion 43 is provided with a screw hole (not shown in the drawings). The operator may fix the upper cloth guide mechanism 60 to the nozzle support portion 43 by aligning the positions of the long hole 611 and the screw hole of the nozzle support portion 43, inserting the screw 622 through the long hole 611 and tightening the screw 622 in the screw hole. When the upper cloth is fed, the right side face of the guide portion 62 may be in contact with the left edge of the upper cloth. Thus, the guide portion 62 may regulate the movement of the upper cloth in the direction orthogonal to the feed direction C and may also guide the upper cloth to the downstream side in the feed direction C. The operator may move the upper cloth guide mechanism 60 in the left-right direction by loosening the screw 622. As a result, the upper cloth guide mechanism 60 may adjust the length in the left-right direction of a left side section of the upper cloth that overlaps with a right side section of the lower cloth.

A guide member 70 will be explained with reference to FIGS. 2, 3, and 6. The guide member 70 includes a guide portion 71 and an adjustment portion 72. The guide portion 71 is disposed above the top face of the base portion 2 and faces the nozzle 51 on the right end side of the nozzle 51. The upper cloth may be placed on the top face of the guide portion 71. A height of the top face of the guide portion 71 from the top face of the base portion 2 is H4. Thus, the upper cloth may be placed on the top face of the guide portion 71 such that the upper cloth is separated from the top face of the base portion 2. The guide portion 71 is a rectangular plate shape that is longer in the left-right direction and is substantially the same shape as the nozzle 51.

As shown in FIGS. 2 and 3, a length L2 of the guide portion 71 in the feed direction C is the same as a length L1 of the nozzle 51 in the feed direction C. An end portion 56 of the guide portion 71 on the downstream side in the feed direction C is on the side of the nozzle 51 with respect to the pressing position 98. The position of the guide portion 71 in the feed direction C is the same as the position of the nozzle 51. More specifically, a central line in the feed direction C of the guide portion 71 and a central line in the feed direction C of the nozzle 51 are on a same line M.

As shown in FIG. 6, a length W2 of the guide portion 71 in the extending direction B is not less than the length W1 of the nozzle 51 in the extending direction B. In the first embodiment, the length W2 is not less than 1.5 times the length W1. The bottom face on the nozzle 51 side, in the extending direction B, of the guide portion 71 is separated from the top face of the base portion 2. The bottom face on the left end side of the guide portion 71 of the first embodiment is separated from the top face of the base portion 2 by a distance H3. A distance D1 from the top face of the belt 20 to the bottom face on the right end side of the nozzle 51 is the same as a distance D2 from the top face of the belt 20 to the bottom face on the left end side of the guide portion 71. The top face of the guide portion 71 is a horizontal surface. It is preferable that the height H4 of the top face of the guide portion 71 from the top face of the base portion 2 be not less than 1 times and not more than 1.5 times a height H1 of the top face of the nozzle 51 from the top face of the base portion 2. If the height H4 is not less than the height HI, it is difficult for the upper cloth to slip and fall from the top face of the nozzle 51 to the side of the guide portion 71. In a case where the height H4 is not less than the height HI, it is sufficient that the distance H3 by which the bottom face on the left end side of the guide portion 71 is separated from the top face of the base portion 2 is less than the height H1 of the top face of the nozzle 51 from the top face of the base portion 2. In this case, even if the upper cloth slips and falls to the side of the nozzle 51, it is difficult for the upper cloth to enter below the lower side of the guide portion 71. As shown in FIG. 6, it is particularly desirable for the height H4 to be the same as the height H1. In this case, it is most difficult for the position of the upper cloth to become unstable in the extending direction B.

A height H2 of the top face of the adjustment portion 72 from the top face of the base portion 2 is lower than the height H4. The right end of the guide portion 71 is inclined gradually downward toward the adjustment portion 72. The adjustment portion 72 supports the right end of the guide portion 71. As shown in FIG. 2, the adjustment portion 72 is a rectangular shape in a plan view, and is provided with a long hole 73 and screws 74 and 75. The long hole 73 is a hole that is long in the left-right direction in a central portion of the adjustment portion 72 and that penetrates through the adjustment portion 72 in the up-down direction. The long hole 73 has a stepped portion in a central portion in the up-down direction. The short diameter and the long diameter of the long hole 73 become smaller on a lower side of the stepped portion. The short diameter of the long hole 73 on the lower side of the stepped portion is slightly larger than the diameter of a shaft portion of each of the screws 74 and 75, and is smaller than the diameter of the head portion of each of the screws 74 and 75. The short diameter of the long hole 73 on an upper side of the stepped portion is larger than the diameter of the head portion of each of the screws 74 and 75. The screws 74 and 75 are inserted through the long hole 73 and are tightened in screw holes (not shown in the drawings) of the base portion 2, thus positioning the guide member 70. The operator may move the guide member 70 in the left-right direction by loosening the screws 74 and 75. As described above, the nozzle 51 may be replaced with another nozzle having a different length in the extending direction B. The adjustment portion 72 is adapted to adjust a distance between the nozzle 51 and the guide portion 71 in the extending direction B to a distance of a range in which the upper cloth does not go slack. It is preferable that the distance between the nozzle 51 and the guide portion 71 in the extending direction B be short. The distance between the nozzle 51 and the guide portion 71 in the extending direction B may be adjusted when the operator replaces the nozzle.

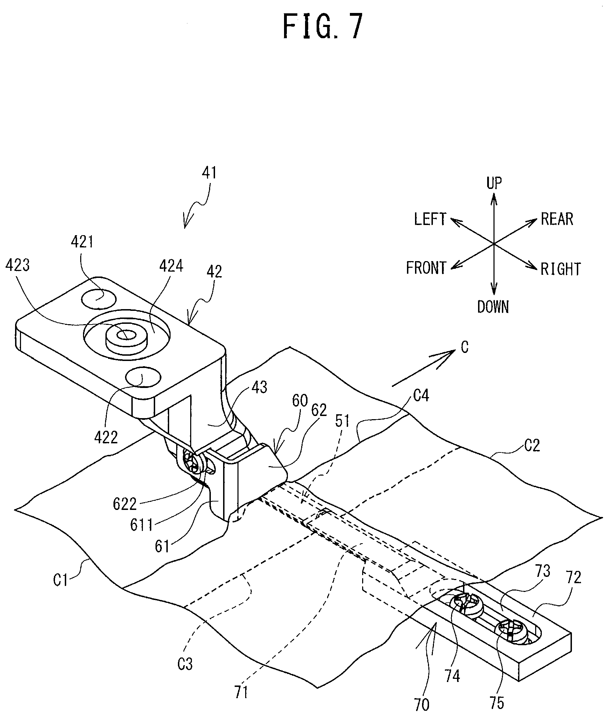

A method for bonding an upper cloth C2 and a lower cloth C1 will be explained with reference to FIG. 7. The operator may place the lower cloth C1 on the top face of the base portion 2. The operator may place the upper cloth C2 on the top face of the nozzle 51 and the top face of the guide portion 71. A right edge C3 of the lower cloth C1 may be positioned in the vicinity of the lower side of the nozzle 51. In this case, a guide plate (not shown in the drawings) that is adapted to guide the right edge C3 of the lower cloth C1 may be attached on the top face of the base portion 2 so that the positioning operation may become easier. A left edge C4 of the upper cloth C2 may be in contact with the guide portion 62 of the upper cloth guide mechanism 60. A left side section of the upper cloth C2 may overlap with a right side section of the lower cloth C1.

The cloth bonding apparatus 1 (refer to FIG. 1) may feed the upper cloth C2 and the lower cloth C1 in the feed direction C by driving of the upper feed roller 17 and the belt 20 (refer to FIG. 1). The operator may cause the left edge C4 of the upper cloth C2 to touch the guide portion 62 such that the upper cloth C2 does not bend. The upper cloth guide mechanism 60 may regulate the movement of the upper cloth C2 in the direction that intersects the feed direction C and may guide the upper cloth C2 in the feed direction C.

Part of the right side section of the lower cloth C1 may be disposed between the belt 20 and the nozzle 51. The nozzle 51 may discharge the adhesive (not shown in the drawings) onto the right side section of the lower cloth C1 that is positioned below the nozzle 51. The upper feed roller 17 and the belt 20 may feed the lower cloth C1 and the upper cloth C2 while clamping and pressing, from above and below, the right side section of the lower cloth C1 on which the adhesive is applied and the left side section of the upper cloth C2. The cloth bonding apparatus 1 may thus bond the upper cloth C2 and the lower cloth C1.

The base portion 2 corresponds to a base portion of the present invention. The nozzle 51 corresponds to a nozzle of the present invention. The nozzle support mechanism 41 corresponds to a nozzle support mechanism of the present invention. The cloth bonding apparatus 1 corresponds to a cloth bonding apparatus of the present invention. The lower feed portion 90 and the upper feed roller 17 correspond to a feed mechanism of the present invention. The guide portion 71 corresponds to a placement portion of the present invention. The guide member 70 corresponds to a guide member of the present invention. The adjustment portion 72 that is provided with the long hole 73 and the screws 74 and 75 corresponds to an adjustment portion of the present invention.

The guide portion 71 of the guide member 70 can support the upper cloth at a position that is above the top face of the base portion 2 and that faces the nozzle 51 on the right end side of the nozzle 51. The cloth bonding apparatus 1 can inhibit the upper cloth from slipping and falling from the nozzle 51 and thus inhibit the position of the left edge of the upper cloth from becoming unstable. As a result, the cloth bonding apparatus 1 can bond the upper cloth and the lower cloth at a desired position.

The length of the guide portion 71 in the extending direction B is not less than the length of the nozzle 51 in the extending direction B. In comparison to a case in which the length of the guide portion 71 in the extending direction B is less than the length of the nozzle 51 in the extending direction B, it is more difficult for the upper cloth to slip and fall from the nozzle 51 or from the guide portion 71 in the extending direction B. In comparison to a case in which the height H4 of the top face of the guide portion 71 from the top face of the base portion 2 is less than 1 times or more than 1.5 times the height H1 of the top face of the nozzle 51 from the top face of the base portion 2, the difference between the height of the nozzle 51 from the top face of the base portion 2 and the height of the guide portion 71 from the top face of the base portion 2 is small. In comparison to the case in which the height H4 is less than 1 times or more than 1.5 times the height HI, it is difficult for the upper cloth to slip and fall from the nozzle 51 or the guide portion 71. The cloth bonding apparatus 1 can inhibit the edge of the upper cloth from slipping and falling from the nozzle 51 and thus inhibit the position of the upper cloth from becoming unstable. In the present embodiment, the height H4 is not less than the height HI, and the distance H3 by which the bottom face of the left end of the guide portion 71 is separated from the top face of the base portion 2 is less than the height H1 of the top face of the nozzle 51 from the top face of the base portion 2. As a result, even if the upper cloth slips and falls to the side of the nozzle 51, the upper cloth does not easily enter below the lower side of the guide portion 71. Thus, the operator may easily place the upper cloth on the guide portion 71.

The end portion 56 of the guide portion 71 on the downstream side in the feed direction C is on the side of the nozzle 51 with respect to at least the pressing position 98. As a result, there is no interference between the guide portion 71 and the upper feed roller 17. The upper feed roller 17 and the lower feed portion 90 can feed the upper cloth and the lower cloth in the feed direction C while pressing the upper cloth and the lower cloth. The length L2 of the guide portion 71 in the feed direction C is the same as the length L1 of the nozzle 51 in the feed direction C. The position of the guide portion 71 in the feed direction C is the same as the position of the nozzle 51 in the feed direction C. The top face of the nozzle 51 and the top face of the guide portion 71 are substantially continuous in the extending direction B. The upper cloth may be placed at the same height from the top face of the base portion 2 in terms of the position of the upper cloth on the top face of the nozzle 51 and the position of the upper cloth on the top face of the guide portion 71. The upper cloth may be placed on the guide portion 71 in a position that has the same height as the position at which the upper cloth is placed on the nozzle 51 and that is in the same position, in the feed direction C, as the position at which the upper cloth is placed on the nozzle 51. With the cloth bonding apparatus 1, the size of the guide portion 71 can be small and it can be made more difficult for the upper cloth to slip and fall from the nozzle 51 or from the guide portion 71.

In a case where the nozzle 51 having a different length in the extending direction B is mounted on the cloth bonding apparatus 1, the distance between the mounted nozzle 51 and the guide portion 71 can be adjusted in accordance with the length in the extending direction B of the nozzle 51. In a case where the nozzle 51 having the different length in the extending direction B is mounted on the cloth bonding apparatus 1, the cloth bonding apparatus 1 can support the upper cloth at a position that is above the base portion 2 and that faces the nozzle 51 on the right end side of the nozzle 51.

The guide portion 71 on the side of the nozzle 51 in the extending direction B is separated from the base portion 2. In comparison to a case in which the guide portion 71 is not separated from the base portion 2, the operator can easily place the lower cloth on the base portion 2.

The cloth bonding apparatus 1 according to a second embodiment will be explained. In the cloth bonding apparatus 1 of the second embodiment, the structure of a guide member 170 is different to that the structure of the guide member 70 of the cloth bonding apparatus 1 of the first embodiment, while other structures are the same. An explanation of structures that are the same as those of the first embodiment is omitted here, and the guide member 170 of the cloth bonding apparatus 1 according to the second embodiment will be explained.

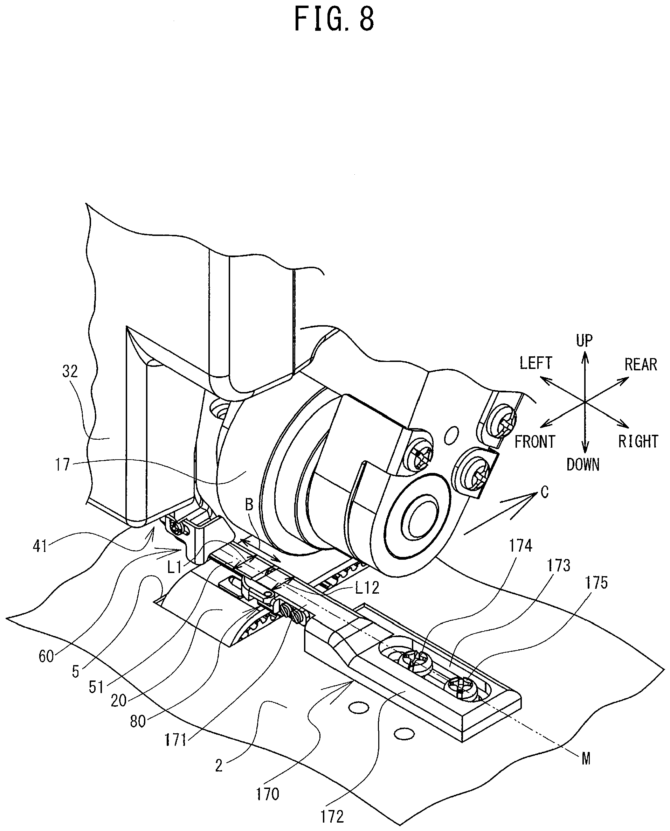

As shown in FIG. 8, the guide member 170 includes a guide portion 171, an adjustment portion 172, and a lower cloth guide mechanism 80. The guide portion 171 and the adjustment portion 172 have substantially the same structure as the guide portion 71 and the adjustment portion 72. The guide portion 171 is disposed above the top face of the base portion 2 and faces the nozzle 51 on the right end side of the nozzle 51. The upper cloth may be placed on the top face of the guide portion 171. The height of the top face of the guide portion 171 from the top face of the base portion 2 is a height H14. Thus, the upper cloth may be placed on the top face of the guide portion 171 such that the upper cloth is separated from the top face of the base portion 2. The guide portion 171 is a rectangular plate shape that is longer in the left-right direction.

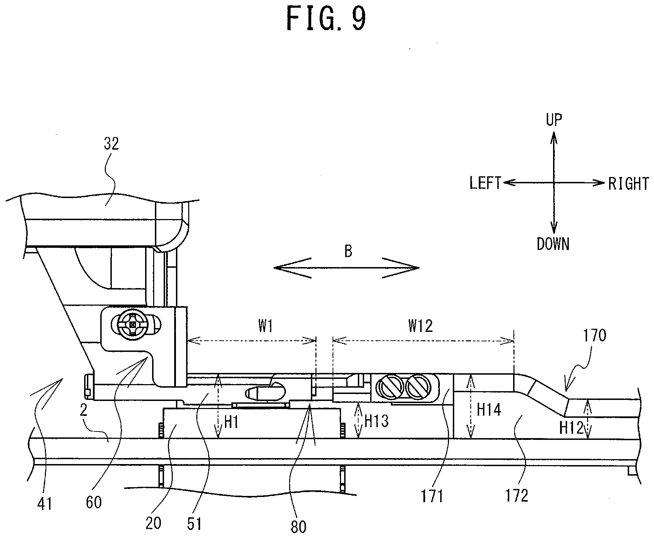

A length L12 of the guide portion 171 in the feed direction C is the same as the length L1 of the nozzle 51 in the feed direction C. A central line in the feed direction C of the guide portion 171 and the central line in the feed direction C of the nozzle 51 are on the same line M. As shown in FIG. 9, a length W12 of the guide portion 171 in the extending direction B is less than the length W1 of the nozzle 51 in the extending direction B. The bottom face on the left end side of the guide portion 171 is separated from the top face of the base portion 2 by a distance H13. The top face of the guide portion 171 is a horizontal surface. The height H14 of the top face of the guide portion 171 from the top face of the base portion 2 is the same as the height H1 of the top face of the nozzle 51 from the top face of the base portion 2. It is sufficient that the height H14 of the top face of the guide portion 171 from the top face of the base portion 2 is not less than 1 times and not more than 1.5 times the height H1 of the top face of the nozzle 51 from the top face of the base portion 2. If the height H14 is not less than the height H1, it is difficult for the upper cloth to slip and fall from the top face of the nozzle 51 to the side of the guide portion 171. In a case where the height H14 is not less than the height HI, it is sufficient that the distance H3 by which the bottom face on the left end side of the guide portion 171 is separated from the top face of the base portion 2 is less than the height H1 of the top face of the nozzle 51 from the top face of the base portion 2. In this case, even if the upper cloth slips and falls to the side of the nozzle 51, it is difficult for the upper cloth to enter below the lower side of the guide portion 171. As shown in FIG. 9, it is particularly desirable for the height H14 to be the same as the height H1. In this case, it is most difficult for the position of the upper cloth to become unstable in the extending direction B.

As shown in FIG. 8, the adjustment portion 172 supports the right end of the guide portion 171. The adjustment portion 172 is a rectangular plate shape in a plan view, and is provided with a long hole 173 and screws 174 and 175. The long hole 173 is a hole that is long in the left-right direction in a central portion of the adjustment portion 172 and that penetrates through the adjustment portion 172 in the up-down direction. The long hole 173 has a stepped portion in a central portion in the up-down direction. The short diameter and the long diameter of the long hole 173 become smaller on a lower side of the stepped portion. The short diameter of the long hole 173 on the lower side of the stepped portion is slightly larger than the diameter of the shaft portion of each of the screws 174 and 175, and is smaller than the diameter of the head portion of each of the screws 174 and 175. The short diameter of the long hole 173 on an upper side of the stepped portion is larger than the diameter of the head portion of each of the screws 174 and 175. The screws 174 and 175 are inserted through the long hole 173 and are tightened in screw holes (not shown in the drawings) of the base portion 2, thus positioning the guide member 170. The operator can move the guide member 170 in the left-right direction by loosening the screws 174 and 175. The adjustment portion 172 is adapted to adjust the distance between the nozzle 51 and the guide portion 171 in the extending direction B. As shown in FIG. 9, a height H12 of the adjustment portion 172 from the base portion 2 is lower than the height H14 of the guide portion 171 from the base portion 2. The right end of the guide portion 171 is inclined gradually downward toward the adjustment portion 172. Two screw holes (not shown in the drawings) are provided aligned in the left-right direction in the front face of the guide portion 171.

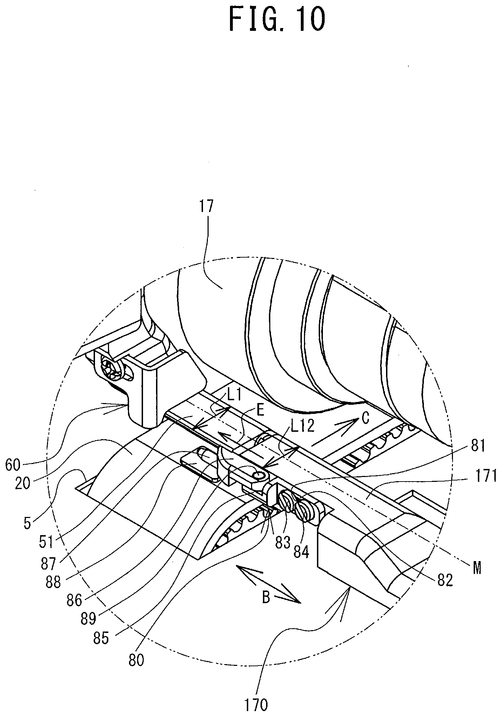

As shown in FIG. 10, the lower cloth guide mechanism 80 is positioned on the upstream side of the guide member 170 in the feed direction C. The lower cloth guide mechanism 80 extends toward a lower portion of the other end of the nozzle 51 in the extending direction B and is adapted to guide the lower cloth. The other end of the nozzle 51 in the extending direction B is the right end of the nozzle 51. The lower cloth guide mechanism 80 is provided on the front left end of the guide portion 171. The lower cloth guide mechanism 80 includes an adjustment portion 82, support portions 85 and 86, a first guide portion 87, and a second guide portion 88. The adjustment portion 82 has a plate shape that extends in the left-right direction. A long hole 81 is provided in a central portion of the adjustment portion 82. The long hole 81 extends in the left-right direction and penetrates through the adjustment portion 82 in the front-rear direction. Screws 83 and 84 are inserted through the long hole 81 and tightened in screw holes (not shown in the drawings) provided on the front right end of the guide portion 171, thus positioning the lower cloth guide mechanism 80 on the front left portion of the guide portion 171. By loosening the screws 83 and 84, the operator may move the lower cloth guide mechanism 80 in the left-right direction. Because the lower cloth guide mechanism 80 may be moved in the left-right direction, it is possible to adjust a position of the right edge of the lower cloth to which the adhesive is applied by the cloth bonding apparatus 1. Thus, the cloth bonding apparatus 1 can bond the upper cloth and the lower cloth at a desired position. The adjustment portion 82 is coupled to the support portion 85. The support portion 85 supports the support portion 86 such that the support portion 86 can be rotated around a shaft 89. The shaft 89 extends in the up-down direction from the top face of the support portion 85 and is inserted through the right end of the support portion 86. The support portion 86 extends in the left-right direction above the support portion 85 and to the front of the guide portion 171. The left front end of the support portion 86 is inclined.

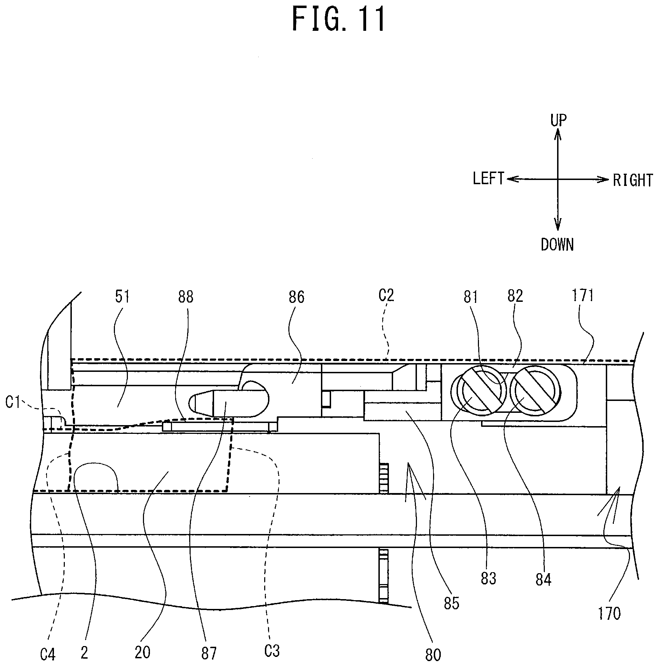

As shown in FIGS. 10 and 11, the first guide portion 87 and the second guide portion 88 extend horizontally from the left end of the support portion 86, that is, from the end of the support portion on the side opposite to the side of the shaft 89. The first guide portion 87 is rod-shaped. The second guide portion 88 has a plate shape that is substantially rectangular in a plan view and that extends in the horizontal direction. The first guide portion 87 and the second guide portion 88 may rotate around the shaft 89 along with the support portion 86 and may be switched between a first posture and a second posture. The first posture is a posture in which a part of the first guide portion 87 and a part of the second guide portion 88 are positioned facing a lower portion of the other end of the nozzle 51 in the extending direction B. The second posture is a posture in which the first guide portion 87 and the second guide portion 88 are separated from the nozzle 51. As shown in FIG. 10, the first posture is a posture in which a direction E from the shaft 89 toward the first guide portion 87 and the second guide portion 88 is parallel to the extending direction B. In a case where the operator uses the lower cloth guide mechanism 80, the operator may set the lower cloth guide mechanism 80 to the first posture. The case where the operator uses the lower cloth guide mechanism 80 may be, for example, a case where the edge of the upper cloth and the edge of the lower cloth are bonded.

As shown in FIGS. 10 and 11, when the lower cloth guide mechanism 80 is in the first posture, the part of the first guide portion 87 and the part of the second guide portion 88 face a part of the bottom face of the nozzle 51 further to the upstream side in the feed direction C than the discharge outlet 53 (refer to FIG. 5) of the nozzle 51, and are positioned in the vicinity of the discharge outlet 53. The height of the top face of the second guide portion 88 is substantially the same as the height of the bottom face of the part of the nozzle 51 that faces the second guide portion 88. The second guide portion 88 may support the right edge C3 of the lower cloth C1 from below, and may guide the lower cloth C1 to the discharge outlet 53. The right edge C3 of the lower cloth C1 may be in contact with the left side face of the support portion 86. The lowermost end of the first guide portion 87 is above the bottom face of the nozzle 51. The right edge C3 of the lower cloth C1 may be disposed between the first guide portion 87 and the second guide portion 88, and the first guide portion 87 and the second guide portion 88 may guide the right edge C3 of the lower cloth C1 without hampering the feeding of the lower cloth C1. In a case where the right edge C3 of the lower cloth C1 is disposed between the first guide portion 87 and the second guide portion 88, when the cloth bonding apparatus 1 feeds the lower cloth C1, the right edge C3 of the lower cloth C1 may not curl up. As a result, the cloth bonding apparatus 1 can apply the adhesive to the right side section of the lower cloth C1 in an even more stable manner.

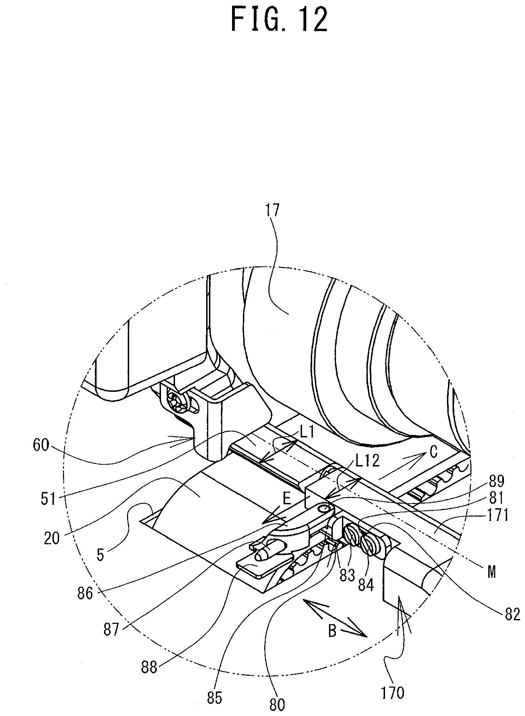

As shown in FIG. 12, the second posture is a posture in which the direction E from the shaft 89 toward the first guide portion 87 and the second guide portion 88 is orthogonal to the extending direction B. In a case where the nozzle 51 is exchanged, or in a case where the swinging portion 30 is swung in the front-rear direction in a state where the nozzle support mechanism 41 is attached to the bottom end face of the second swinging portion 32, the operator may set the first guide portion 87 and the second guide portion 88 to the second posture. By switching the first guide portion 87 and the second guide portion 88 to the second posture, it is possible to inhibit the nozzle 51 from interfering with the first guide portion 87 and the second guide portion 88.

The guide portion 171 corresponds to the placement portion of the present invention. The guide member 170 corresponds to the guide member of the present invention. The adjustment portion 172 that is provided with the long hole 173 and the screws 174 and 175 corresponds to the adjustment portion of the present invention. The first guide portion 87 and the second guide portion 88 correspond to a lower cloth guide portion of the present invention. The shaft 89 corresponds to a shaft portion of the present invention. The adjustment portion 82 corresponds to a guide position adjustment portion of the present invention.

The cloth bonding apparatus 1 of the second embodiment includes the lower cloth guide mechanism 80. The cloth bonding apparatus 1 can maintain the position of the right edge of the lower cloth, on to which the adhesive (not shown in the drawings) is applied, within a specific range. As a result, the cloth bonding apparatus 1 can bond the upper cloth and the lower cloth at a desired position. The lower cloth guide mechanism 80 includes the adjustment portion 82. The cloth bonding apparatus 1 can adjust the position of the right edge of the lower cloth on to which the adhesive is applied. Thus, the cloth bonding apparatus 1 can bond the upper cloth and the lower cloth at a desired position. The first guide portion 87 and the second guide portion 88 of the lower cloth guide mechanism 80 may be rotated around the shaft 89, and thus can be switched between the first posture and the second posture. The first posture is the posture in which the first guide portion 87 and the second guide portion 88 are positioned below the other end (the right side) of the nozzle 51 in the extending direction B. The second posture is the posture in which the first guide portion 87 and the second guide portion 88 are separated from the nozzle 51. Therefore, in a case where the operator switches the position of the nozzle 51 or switches the type of the nozzle 51, for example, it is possible to inhibit interference between the nozzle 51 and the first guide portion 87 and between the nozzle 51 and the second guide portion 88 by switching the first guide portion 87 and the second guide portion 88 to the second posture. The cloth bonding apparatus 1 can adjust the position of the right edge of the lower cloth on to which the adhesive is applied. As a result, the cloth bonding apparatus 1 can bond the upper cloth and the lower cloth at a desired position.

The cloth bonding apparatus 1 according to a third embodiment will be explained. In the cloth bonding apparatus 1 of the third embodiment, the structure of a guide member 270 is different to the structure of the guide member 70 of the cloth bonding apparatus 1 of the first embodiment, while other structures are the same. An explanation of structures that are the same as those of the first embodiment is omitted here, and the guide member 270 of the cloth bonding apparatus 1 of the third embodiment will be explained.

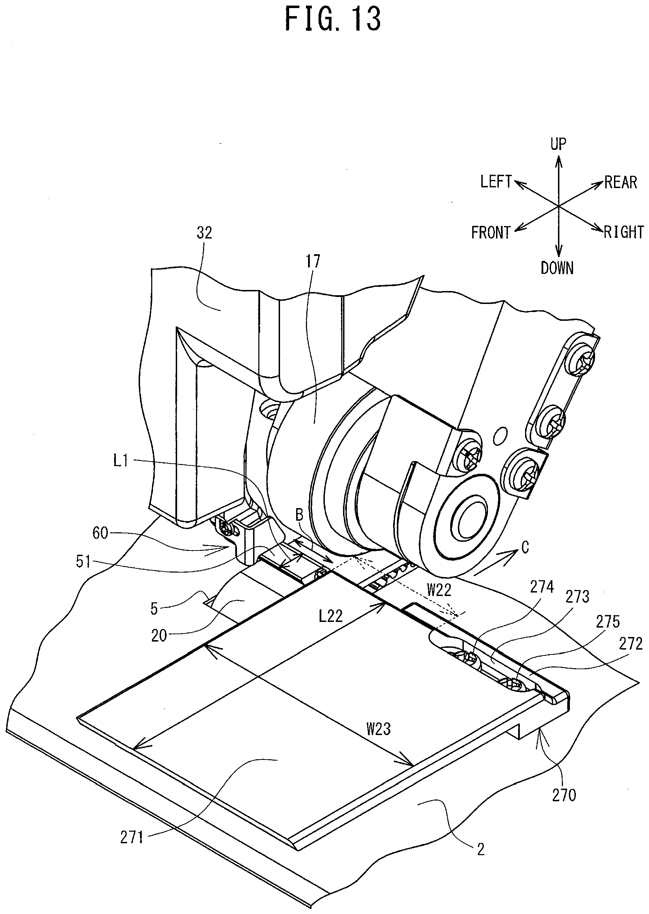

As shown in FIG. 13, the guide member 270 includes a guide portion 271 and an adjustment portion 272. The guide portion 271 is disposed above the top face of the base portion 2 and faces the nozzle 51 on the right end side of the nozzle 51. The upper cloth may be placed on the top face of the guide portion 271. A height of the top face of the guide portion 271 from the top face of the base portion 2 is H24. Thus, the upper cloth may be placed on the guide portion 271 such that the upper cloth is separated from the top face of the base portion 2. The guide portion 271 is a rectangular plate shape having a face that extends horizontally.

A length L22 of the guide portion 271 in the feed direction C is longer than the length L1 of the nozzle 51 in the feed direction C. The guide portion 271 is provided in a range including the position of the nozzle 51 in the feed direction C. The front end of the guide portion 271 is positioned further to the front than the nozzle 51, and extends to the vicinity of the front end of the base portion 2. The rear end of the guide portion 271 is in substantially the same position as the rear end of the nozzle 51 in the feed direction C.

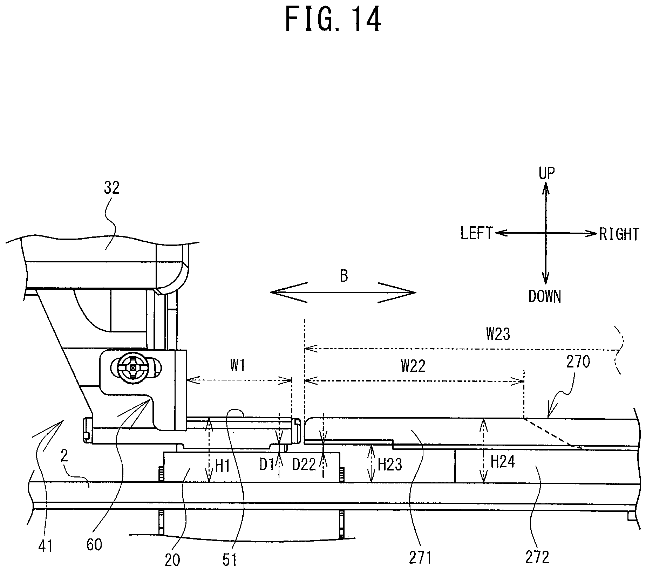

As shown in FIGS. 13 and 14, a length W22 of the guide portion 271 in the extending direction B at a position that the guide portion 271 faces the nozzle 51 is not less than the length W1 of the nozzle 51 in the extending direction B. A length W23 of the guide portion 271 in the extending direction B at a position that is further upstream in the feed direction C than the nozzle 51 is longer than the length W22. The right end of the guide portion 271 is in the same position as the right end of the adjustment portion 272. The bottom face of the guide portion 271 is separated from the base portion 2 on the nozzle 51 side in the extending direction B. In the third embodiment, the bottom face on the left end side of the guide portion 271 is separated from the top face of the base portion 2 by a distance H23. The distance D1 from the top face of the belt 20 to the bottom face on the right end side of the nozzle 51 is the same as a distance D22 from the top face of the belt 20 to the bottom face on the left end side of the guide portion 271. The top face of the guide portion 271 is a horizontal surface. The height H24 of the top face of the guide portion 271 from the top face of the base portion 2 is the same as the height H1 of the top face of the nozzle 51 from the top face of the base portion 2. It is sufficient that the height H24 of the top face of the guide portion 271 from the top face of the base portion 2 is not less than 1 times and not more than 1.5 times the height H1 of the top face of the nozzle 51 from the top face of the base portion 2. If the height H24 is not less than the height HI, it is difficult for the upper cloth to slip and fall from the top face of the nozzle 51 to the side of the guide portion 271. If the height H24 is not less than the height H1, it is sufficient that the distance H23 by which the bottom face on the left end side of the guide portion 271 is separated from the top face of the base portion 2 is less than the height H1 of the top face of the nozzle 51 from the top face of the base portion 2. In this case, even if the upper cloth slips and falls to the side of the nozzle 51, it is difficult for the upper cloth to enter below the lower side of the guide portion 271. As shown in FIG. 14, it is particularly desirable for the height H24 to be the same as the height H1. In this case, it is most difficult for the position of the upper cloth to become unstable in the extending direction B.

The adjustment portion 272 supports the right end of the guide portion 271. The adjustment portion 272 is a rectangular shape in a plan view, and is provided with a long hole 273 and screws 274 and 275. The long hole 273 is a hole that is long in the left-right direction in a central portion of the adjustment portion 272 and that penetrates through the adjustment portion 272 in the up-down direction. The long hole 273 has a stepped portion in a central portion in the up-down direction. The short diameter and the long diameter of the long hole 273 become smaller in a lower side of the stepped portion. The short diameter of the long hole 273 in the lower side of the stepped portion is slightly larger than the diameter of the shaft portion of each of the screws 274 and 275, and is smaller than the diameter of the head portion of each of the screws 274 and 275. The short diameter of the long hole 273 in an upper side of the stepped portion is larger than the diameter of the head portion of each of the screws 274 and 275. The screws 274 and 275 are inserted through the long hole 273 and are tightened in screw holes (not shown in the drawings) of the base portion 2, thus positioning the guide member 270. The operator may move the guide member 270 in the left-right direction by loosening the screws 274 and 275. As described above, the nozzle 51 may be replaced with a nozzle having a different length in the extending direction B from the length L1 of the nozzle 51. The operator may adjust the distance between the nozzle and the guide portion 271 in the extending direction B when the nozzle is replaced.

The guide portion 271 corresponds to the placement portion of the present invention. The guide member 270 corresponds to the guide member of the present invention. The adjustment portion 272 that is provided with the long hole 273 and the screws 274 and 275 corresponds to the adjustment portion of the present invention.

With the cloth bonding apparatus 1 of the third embodiment, the guide portion 271 of the guide member 270 can support the upper cloth in a position that is above the top face of the base portion 2 and that faces the nozzle 51 on the right end side of the nozzle 51. The cloth bonding apparatus 1 can inhibit the edge of the upper cloth from slipping and falling from the nozzle 51 and thus inhibit the position of the upper cloth from becoming unstable. As a result, the cloth bonding apparatus 1 can bond the upper cloth and the lower cloth at a desired position.

The present invention is not limited to the above-described embodiments and various modifications are possible. The cloth bonding apparatus 1 may include a belt in place of the upper feed roller 17. The upper cloth and the lower cloth may be sandwiched and pressed from above and below between the belt and the belt 20, and may be fed by the belt rotating in cooperation with the belt 20.

The configuration of the nozzle 51 may be changed as appropriate, including the shape of the nozzle 51, the length in the extending direction B of the nozzle 51, and the shape, position and number etc. of the discharge outlets 53. The configuration of the nozzle support mechanism 41, such as the shape of the nozzle support mechanism 41, may be changed as appropriate.

It is sufficient that the guide portions 71, 171, and 271 can support the upper cloth in a position that is above the top face of the base portion 2 and that faces the nozzle 51 on the right end side of the nozzle 51. The configuration of the guide portions 71, 171, and 271, such as the shape, size, etc. of each of the guide portions 71, 171, and 271, may be changed as appropriate. For example, the length of the guide portion in the extending direction B may be set as appropriate while taking into account the length of the nozzle 51 in the extending direction, the material of the upper cloth, the length of the upper cloth in the extending direction, etc. The height of the top face of the guide portion 71 from the top face of the base portion 2 may be set while taking into account a height at which it is difficult for the upper cloth to slip and fall from the nozzle 51 or the guide portion 71. It is sufficient that the end of each of the guide portions 71, 171, and 271 on the downstream side in the feed direction C is positioned further to the upstream side in the feed direction C than the pressing position 98 and does not obstruct the feeding of the upper cloth. The length of each of the guide portions 71, 171, and 271 in the feed direction C may be set as appropriate while taking into account the length of the nozzle 51 in the feed direction C, the material of the upper cloth, the position of the guide portion in the feed direction, etc. The position of the guide portion 71 in the feed direction C may be set as appropriate while taking into account the position of the nozzle in the feed direction, the position of the pressing position 98 in the feed direction, the material of the upper cloth, etc. The right end of each of the guide portions 71 and 171 need not necessarily be inclined gradually downward toward the adjustment portions 72 and 172.

The guide member 70 may be provided with a screw hole in place of the long hole 73, and it need not necessarily be possible to adjust the distance between the nozzle 51 and the guide portion 71 in the extending direction B. In this case, a plurality of guide members may each correspond to one of lengths in the extending direction B of a plurality of nozzles that can each be attached to the cloth bonding apparatus. One of the plurality of guide members may be selectively attached to the base portion 2. The guide member 70 may be provided with a plurality of screw holes in place of the long hole 73. The operator may change the screw holes through which the screws 74 and 75 are inserted, and thereby adjust the distance between the nozzle 51 and the guide portion 71 in the extending direction B. The guide portion on the side facing the nozzle 51 in the extending direction B need not necessarily be separated from the base portion 2.

The lower cloth guide mechanism 80 need not necessarily include the shaft 89. In this case, the lower cloth guide mechanism 80 may be adapted to be switched between the first posture and the second posture using the adjustment portion 82. The operator may move the first guide portion 87 and the second guide portion 88 to the right by loosening the screws 83 and 84, and may withdraw the first guide portion 87 and the second guide portion 88 from below the other end of the nozzle 51 in the extending direction B. The lower cloth guide mechanism 80 need not necessarily be switched between the first posture and the second posture. In the lower cloth guide mechanism 80, it need not necessarily be possible to adjust the positions of the first guide portion 87 and the second guide portion 88 in the extending direction.

## Claims

1. A cloth bonding apparatus (1) comprising:
a base portion (2);
a feed mechanism (17, 90) that is adapted to feed an upper cloth and a lower cloth in a feed direction while pressing the upper cloth and the lower cloth at a pressing position (98), the upper cloth and the lower cloth being disposed on the base portion and facing each other;
a nozzle (51) that is adapted to discharge adhesive, on an upstream side of the feed mechanism in the feed direction, between the upper cloth and the lower cloth that are disposed on the base portion, the nozzle extending in an extending direction intersecting the feed direction;
a nozzle support mechanism (41) that is adapted to support one end of the nozzle in the extending direction; and
a guide member (70, 170, 270) that includes a placement portion (71, 171, 271), the placement portion being adapted such that the upper cloth is placed thereon and is separated from a top face of the base portion, and the placement portion being disposed above the top face of the base portion and facing the nozzle on a side of the other end of the nozzle in the extending direction, wherein a lower end of the placement portion on the side of the nozzle is separated from the top face of the base portion,
**characterized in that**
the nozzle is adapted to discharge the adhesive between the upper cloth and the lower cloth in a state in which the upper cloth is placed on a top face of the nozzle and a top face of the placement portion, and
a distance (H3, H13, H23) by which the lower end of the placement portion on the side of the nozzle is separated from the top face of the base portion is less than the height (H1) of the top face of the nozzle from the top face of the base portion.

2. The cloth bonding apparatus according to claim 1, wherein
the placement portion has a plate shape, and
a height of the top face of the placement portion from the top face of the base portion is not less than a height of the top face of the nozzle from the top face of the base portion.

3. The cloth bonding apparatus according to either one of claims 1 and 2, wherein
an end of the placement portion on a downstream side in the feed direction is on a side of the nozzle with respect to the pressing position.

4. The cloth bonding apparatus according to either one of claims 1 and 2, wherein
a length of the placement portion in the feed direction is the same as a length of the nozzle in the feed direction, and
a position of the placement portion in the feed direction is the same as a position of the nozzle in the feed direction.

5. The cloth bonding apparatus according to any one of claims 1 to 4, wherein
a length of the placement portion in the extending direction is not less than a length of the nozzle in the extending direction, and
the height of the top face of the placement portion from the top face of the base portion is not less than 1 times and not more than 1.5 times the height of the top face of the nozzle from the top face of the base portion.

6. The cloth bonding apparatus according to any one of claims 1 to 5, wherein
the guide member further includes an adjustment portion (72, 172, 272) that is adapted to adjust a distance between the other end of the nozzle in the extending direction and the placement portion.

7. The cloth bonding apparatus according to any one of claims 1 to 6, wherein
the guide member further includes a lower cloth guide portion (87, 88) that is adapted to guide the lower cloth, the lower cloth guide portion being disposed on an upstream side of the placement portion in the feed direction, and
the lower cloth guide portion is adapted to guide the lower cloth in a state in which a part of the lower cloth guide portion is positioned facing a lower portion of the other end of the nozzle in the extending direction.

8. The cloth bonding apparatus according to claim 7, wherein
the guide member further includes a shaft portion (89) that is adapted to rotatably support the lower cloth guide portion, and
the lower cloth guide portion is adapted to switch between a first posture and a second posture by rotating around the shaft portion, the first posture being a posture in which the part of the lower cloth guide portion is positioned facing the lower portion of the other end of the nozzle in the extending direction, and the second posture being a posture in which the lower cloth guide portion is separated from the lower portion of the other end of the nozzle in the extending direction.

9. The cloth bonding apparatus according to either one of claims 7 and 8, wherein
the guide member further includes a guide position adjustment portion (82) that is adapted to adjust a position of the lower cloth guide portion in the extending direction.

## Patentansprüche

1. Tuchfügegerät (1) mit:
einem Basisabschnitt (2);
einem Vorschubmechanismus (17, 90), der daran angepasst ist, ein oberes Tuch und ein unteres Tuch in einer Vorschubrichtung vorzuschieben, während das obere Tuch und das untere Tuch an eine Druckposition (98) gedrückt werden, wobei das obere Tuch und das untere Tuch an dem Basisabschnitt angeordnet sind und einander gegenüberliegen;
einer Düse (51), die daran angepasst ist, an einer stromaufwärtigen Seite des Vorschubmechanismus' in der Vorschubrichtung zwischen dem oberen Tuch und dem unteren Tuch, die an dem Basisabschnitt angeordnet sind, ein Klebemittel auszulassen, wobei sich die Düse in einer Erstreckungsrichtung erstreckt, die die Vorschubrichtung schneidet;
einem Düsenstützmechanismus (41), der daran angepasst ist, ein Ende der Düse in der Erstreckungsrichtung zu stützen; und
einem Führungselement (70, 170, 270), das einen Platzierungsabschnitt (71, 171, 271) aufweist, wobei der Platzierungsabschnitt so angepasst ist, dass das obere Tuch daran platziert ist und von einer oberen Seite des Basisabschnitts getrennt ist, und wobei der Platzierungsabschnitt über der oberen Seite des Basisabschnitts und gegenüber der Düse an einer Seite des anderen Endes der Düse in der Erstreckungsrichtung angeordnet ist, wobei ein unteres Ende des Platzierungsabschnitts an der Seite der Düse von der oberen Seite des Basisabschnitts getrennt ist,
**dadurch gekennzeichnet, dass**
die Düse daran angepasst ist, das Klebemittel zwischen dem oberen Tuch und dem unteren Tuch in einem Zustand auszulassen, in dem das obere Tuch an einer oberen Seite der Düse und einer oberen Seite des Platzierungsabschnitts platziert ist, und
ein Abstand (H3, H13, H23), über den das untere Ende des Platzierungsabschnitts an der Seite der Düse von der oberen Seite des Basisabschnitts getrennt ist, kleiner ist als die Höhe (H1) der oberen Seite der Düse von der oberen Seite des Basisabschnitts.

2. Tuchfügegerät gemäß Anspruch 1, wobei
der Platzierungsabschnitt eine Plattenform hat, und
eine Höhe einer der oberen Seite des Platzierungsabschnitts von der oberen Seite des Basisabschnitts nicht kleiner ist als eine Höhe der oberen Seite der Düse von der oberen Seite des Basisabschnitts.

3. Tuchfügegerät gemäß einem der Ansprüche 1 und 2, wobei
ein Ende des Platzierungsabschnitts an einer stromabwärtigen Seite in der Vorschubrichtung an einer Seite der Düse hinsichtlich des Drückabschnitts ist.

4. Tuchfügegerät gemäß einem der Ansprüche 1 und 2, wobei
eine Länge des Platzierungsabschnitts in der Vorschubrichtung gleich einer Länge der Düse in der Vorschubrichtung ist, und
eine Position des Platzierungsabschnitts in der Vorschubrichtung gleich einer Position der Düse in der Vorschubrichtung ist.

5. Tuchfügegerät gemäß einem der Ansprüche 1 bis 4, wobei
eine Länge des Platzierungsabschnitts in der Erstreckungsrichtung nicht kleiner ist als eine Länge der Düse in der Erstreckungsrichtung, und
eine Höhe der oberen Seite des Platzierungsabschnitts von der oberen Seite des Basisabschnitts nicht kleiner ist als das Einfache und nicht größer ist als das 1,5-fache der Höhe der oberen Seite der Düse von der oberen Seite des Basisabschnitts.

6. Tuchfügegerät gemäß einem der Ansprüche 1 bis 5, wobei
das Führungselement des Weiteren einen Einstellabschnitt (72, 172, 272) aufweist, der daran angepasst ist, einen Abstand zwischen dem anderen Ende der Düse in der Erstreckungsrichtung und dem Platzierungsabschnitt einzustellen.

7. Tuchfügegerät gemäß einem der Ansprüche 1 bis 6, wobei
das Führungselement des Weiteren einen unteren Tuchführungsabschnitt (87, 88) aufweist, der daran angepasst ist, das untere Tuch zu führen, wobei der untere Tuchführungsabschnitt an einer stromaufwärtigen Seite des Platzierungsabschnitts in der Vorschubrichtung angeordnet ist, und
der untere Tuchführungsabschnitt daran angepasst ist, das untere Tuch in einem Zustand zu führen, in dem ein Teil des unteren Tuchführungsabschnitts gegenüber einem unteren Abschnitt des anderen Endes der Düse in der Erstreckungsrichtung positioniert ist.

8. Tuchfügegerät gemäß Anspruch 7, wobei
das Führungselement des Weiteren einen Schaftabschnitt (89) aufweist, der daran angepasst ist, den unteren Tuchführungsabschnitt drehbar zu stützen, und
der untere Tuchführungsabschnitt daran angepasst ist, zwischen einer ersten Stellung und einer zweiten Stellung zu wechseln, indem er sich um den Schaftabschnitt dreht, wobei die erste Stellung eine Stellung ist, in der der Teil des unteren Tuchführungsabschnitts gegenüber dem unteren Abschnitt des anderen Endes der Düse in der Erstreckungsrichtung positioniert ist, und wobei die zweite Stellung ist, in der der untere Tuchführungsabschnitt von dem unteren Abschnitt des anderen Endes der Düse in der Erstreckungsrichtung getrennt ist.

9. Tuchfügegerät gemäß einem der Ansprüche 7 und 8, wobei
das Führungselement des Weiteren einen Führungspositionseinstellabschnitt (82) aufweist, der daran angepasst ist, eine Position des unteren Tuchführungsabschnitts in der Erstreckungsrichtung einzustellen.

## Revendications

1. Ensemble de liaison de tissus (1) comprenant :
une portion de base (2) ;
un mécanisme d'alimentation (17, 90) qui est adapté pour alimenter un tissu supérieur et un tissu inférieur dans une direction d'alimentation tout en pressant le tissu supérieur et le tissu inférieur au niveau d'une position de pression (98), le tissu supérieur et le tissu inférieur étant disposés sur la portion de base et se faisant face l'un l'autre ;
une buse (51) qui est adaptée pour évacuer un adhésif, sur un côté amont du mécanisme d'alimentation dans la direction d'alimentation, entre le tissu supérieur et le tissu inférieur qui sont disposés sur la portion de base, la buse s'étendant dans une direction d'extension coupant la direction d'alimentation ;
un mécanisme de support de buse (41) qui est adapté pour supporter une extrémité de la buse dans la direction d'extension ; et
un élément de guidage (70, 170, 270) qui comprend une portion de placement (71, 171, 271), la portion de placement étant adaptée de sorte que le tissu supérieur est placé dessus et est séparé d'une face supérieure de la portion de base, et la portion de placement étant disposée au-dessus de la face supérieure de la portion de base et faisant face à la buse sur un côté de l'autre extrémité de la buse dans la direction d'extension, dans lequel une extrémité inférieure de la portion de placement sur le côté de la buse est séparée de la face supérieure de la portion de base,
**caractérisé en ce que**
la buse est adaptée pour évacuer l'adhésif entre le tissu supérieur et le tissu inférieur dans un état dans lequel le tissu supérieur est placé sur une face supérieure de la buse et une face supérieure de la portion de placement, et
une distance (H3, H13, H23) à laquelle l'extrémité inférieure de la portion de placement sur le côté de la buse est séparée de la face supérieure de la portion de base est inférieure à la hauteur (H1) de la face supérieure de la buse à partir de la face supérieure de la portion de base.

2. Ensemble de liaison de tissus selon la revendication 1, dans lequel
la portion de placement a une forme de plaque, et
une hauteur de la face supérieure de la portion de placement à partir de la face supérieure de la portion de base n'est pas inférieure à une hauteur de la face supérieure de la buse à partir de la face supérieure de la portion de base.

3. Ensemble de liaison de tissus selon l'une quelconque des revendications 1 ou 2, dans lequel
une extrémité de la portion de placement sur un côté aval dans la direction d'alimentation est sur un côté de la buse par rapport à la position de pression.

4. Ensemble de liaison de tissus selon l'une quelconque des revendications 1 ou 2, dans lequel
une longueur de la portion de placement dans la direction d'alimentation est la même qu'une longueur de la buse dans la direction d'alimentation, et
une position de la portion de placement dans la direction d'alimentation est la même qu'une position de la buse dans la direction d'alimentation.

5. Ensemble de liaison de tissus selon l'une quelconque des revendications 1 à 4, dans lequel
une longueur de la portion de placement dans la direction d'extension n'est pas inférieure à une longueur de la buse dans la direction d'extension, et
la hauteur de la face supérieure de la portion de placement à partir de la face supérieure de la portion de base n'est pas inférieure à 1 fois et pas supérieure 1,5 fois la hauteur de la face supérieure de la buse à partir de la face supérieure de la portion de base.

6. Ensemble de liaison de tissus selon l'une quelconque des revendications 1 à 5, dans lequel
l'élément de guidage comprend en outre une portion d'ajustement (72, 172, 272) qui est adaptée pour ajuster une distance entre l'autre extrémité de la buse dans la direction d'extension et la portion de placement.

7. Ensemble de liaison de tissus selon l'une quelconque des revendications 1 à 6, dans lequel
l'élément de guidage comprend en outre une portion de guidage de tissu inférieur (87, 88) qui est adaptée pour guider le tissu inférieur, la portion de guidage de tissu inférieur étant disposée sur un côté amont de la portion de placement dans la direction d'alimentation, et
la portion de guidage de tissu inférieur est adaptée pour guider le tissu inférieur dans un état dans lequel une partie de la portion de guidage de tissu inférieur est positionnée en face d'une portion inférieure de l'autre extrémité de la buse dans la direction d'extension.

8. Ensemble de liaison de tissus selon la revendication 7, dans lequel
l'élément de guidage comprend en outre une portion d'arbre (89) qui est adaptée pour supporter de manière rotative la portion de guidage de tissu inférieur, et
la portion de guidage de tissu inférieur est adaptée pour commuter entre une première place et une deuxième place par rotation autour de la portion d'arbre, la première place étant une place dans laquelle la partie de la portion de guidage de tissu inférieur est positionnée en face de la portion inférieure de l'autre extrémité de la buse dans la direction d'extension, et la deuxième place étant une place dans laquelle la portion de guidage de tissu inférieur est séparée de la portion inférieure de l'autre extrémité de la buse dans la direction d'extension.

9. Ensemble de liaison de tissus selon l'une quelconque des revendications 7 ou 8, dans lequel
l'élément de guidage comprend en outre une portion d'ajustage de position de guidage (82) qui est adaptée pour ajuster une position de la portion de guidage de tissu inférieur dans la direction d'extension.
